# Europäisches Patentamt
## European Patent Office
## Office européen des brevets

(19)

(11) Veröffentlichungsnummer: **0 174 437**
**B1**

(12) # EUROPÄISCHE PATENTSCHRIFT

(45) Veröffentlichungstag der Patentschrift:
**21.09.88**

(51) Int. Cl.⁴: **B 25 J 19/00,** B 66 C 23/00

(21) Anmeldenummer: **85105944.4**

(22) Anmeldetag: **14.05.85**

(54) **Manipulator nach dem Pantographenprinzip.**

(30) Priorität: **19.06.84 US 622126**

(43) Veröffentlichungstag der Anmeldung:
**19.03.86 Patentblatt 86/12**

(45) Bekanntmachung des Hinweises auf die Patenterteilung:
**21.09.88 Patentblatt 88/38**

(84) Benannte Vertragsstaaten:
**DE FR GB IT**

(56) Entgegenhaltungen:
**EP-A-0 041 221**
**DE-A-2 330 393**
**FR-A-2 348 020**
**US-A-3 752 325**
**US-A-3 880 393**
**US-A-4 441 854**

(73) Patentinhaber: **Thyssen Industrie AG, Am Thyssenhaus 1, D-4300 Essen 1 (DE)**

(72) Erfinder: **Doege, Joachim, Dipl.- Ing., Kettinger Strasse 84, D-1000 Berlin 49 (DE)**
Erfinder: **Paschke, Hanns- Dieter, Dipl.- Ing., Müllenhoffstrasse 13, D-1000 Berlin (DE)**
Erfinder: **Tran, Ke Dat, Ollenhauerstrasse 32, D-1000 Berlin 51 (DE)**

(74) Vertreter: **Eberhard, Friedrich, Dr., Am Thyssenhaus 1, D-4300 Essen 1 (DE)**

EP 0 174 437 B1

## Beschreibung

Die Erfindung betrifft einen Manipulator nach dem Pantographenprinzip mit zwei zueinander parallelen Holmen, einem Lastarm und einem dazu parallelen Lenkhebel, die gelenkig zu einem Parallelogrammgestänge zusammengeschlossen sind, wobei ein Holm schwenkbar an einem Halteteil eines um eine vertikale Achse drehbaren Ständers gelagert ist und der mit einer Rollenführung versehene Lenkhebel an einem Lastzylinder abgestützt ist, der eine Balanciersteuerung aufweist.

Bei derartigen Manipulatoren ist das Bewegen einer am Lastarm befindlichen Last in einer horizontalen Ebene einfach und erfordert theoretisch keinerlei Arbeit, weil die geodätische Höhe der Last nicht verändert wird. Die Vertikalbewegung erfolgt mit Hilfe eines Druckmittels, das dem Lastzylinder zugeführt bzw. aus diesem abgeführt wird. Als Lastzylinder sind herkömmliche Kolben-Zylinder-Anordnungen üblich, deren Kolben eine aus dem Zylinder ragende Kolbenstange aufweist, die auf das Parallelogrammgestänge einwirkt. Durch Zuführen des Druckmittels wird die Last aufwärtsbewegt, durch Abführen des Druckmittels wird die Last abwärtsbewegt und bei abgeschlossenem Zylinder bleibt die vertikale Position der Last erhalten.

Besonders vorteilhaft in diesem Zusammenhang ist eine Balanciersteuerung des Lastzylinders. Bei dieser Steuerung wird der Druck im Lastzylinder mit einem für jede Last bestimmten und konstanten Druck, dem sogenannten Referenzdruck, verglichen. In Abhängigkeit von der Druckdifferenz wird dann ein Balancierventil so verstellt, daß dem Lastzylinder Druckmittel zugeführt wird, wenn der Druck im Lastzylinder geringer ist als der Referenzdruck, oder es wird Druckmittel aus dem Lastzylinder abgeführt, wenn der Druck im Lastzylinder höher ist als der Referenzdruck.

Eine solche Druckdifferenz zwischen dem Druck im Lastzylinder und dem Referenzdruck entsteht üblicherweise durch manuell es Anheben oder Absenken der Last. Eine Bedienungsperson muß dazu soviel Kraft aufwenden, daß die Reibung zwischen Kolben und Zylinder im Lastzylinder überwunden wird und die Druckdifferenz groß genug wird, damit das Balancierventil anspricht. In der Praxis hat sich gezeigt, daß die Kraft zur Überwindung der Reibung im Lastzylinder so groß ist, daß ein feinfühliges und ermüdungsfreies Bewegen der Last meistens nicht möglich ist. Das hängt auch damit zusammen, daß bei den bisher üblichen Lastzylindern in Form von Kolben-Zylinder-Anordnungen der Kolben sehr exakt geführt werden muß, um ein einwandfreies Zusammenwirken der Kolbendichtung mit der Innenwand des Zylinders zu erreichen. Da der Kolben einerseits und der Zylinder andererseits mit Teilen des Manipulators verbunden sind, die relativ zueinander beweglich sind, müssen die Verbindungen von Kolben bzw. Kolbenstange und Zylinder mit ihren zugeordneten Bauteilen gelenkig sein. Die Konstruktionen benötigen deshalb viel Platz und sind kostenaufwendig.

Aufgabe der Erfindung ist es, ein feinfühliges und ermüdungsfreies Bewegen einer vom Manipulator aufgenommenen Last zu ermöglichen und gleichzeitig den Platzbedarf, insbesondere für den Lastzylinder, zu reduzieren.

Diese Aufgabe wird dadurch gelöst, daß der Lastzylinder ein Membranzylinder ist, dessen Zylinderraum mit einer am Membranzylinder eingespannten Membran abgeschlossen ist, und daß eine in den Zylinderraum eintauchende Membranabstützung vorgesehen ist. Bei diesem Manipulator wird die Abdichtung zwischen Kolben und Zylinder von der Membran übernommen, die auf der kolbenartigen Membranabstützung lediglich aufliegt. Deswegen kann sowohl auf eine zusätzliche Abdichtung zwischen der kolbenartigen Membranabstützung und dem Membranzylinder als auch auf eine exakte Führung zwischen Membranabstützung und Membranzylinder verzichtet werden. Dadurch wird nicht nur die Reibung zwischen Membranabstützung und Membranzylinder verringert, sondern auch der Platzaufwand. Insgesamt ergibt sich eine kleinere und kostengünstigere Konstruktion.

Nach bevorzugter Ausführung kann die Membran eine Langhubmembran sein, wobei zur Aufnahme der Membranumlenkung der Innendurchmesser des Membranzylinders größer ist als der Außendurchmesser der Membranabstützung. Das gewährleistet eine zwängungsfreie Bewegung der Membran, insbesondere ihrer Umlenkung bei Relativbewegung zwischen Membranzylinder und Membranabstützung.

Besonders günstig werden die Verhältnisse dann, wenn die Rollenführung aus einer mit dem Lastzylinder verstellbaren Führungsbahn für eine darauf abgestützte Rolle des Lenkhebels besteht, wenn die Führungsbahn an eine in Verstellrichtung des Lastzylinders am Ständer verschiebliche Geräteführung angeschlossen ist und wenn der Membranzylinder an der Geräteführung sowie die Membranabstützung am Ständer geführt und gehalten sind oder umgekehrt. Hierbei stützt sich der Lastarm mit seiner Rolle auf der Führungsbahn ab, die ihrerseits über Membranzylinder und Membranabstützung auf dem Ständer abgestützt ist. Die Verbindung der Führungsbahn mit einer am Ständer verschieblichen Geräteführung sichert eine hinreichende Führung des Membranzylinders relativ zur Membranabstützung bei entsprechenden Relativbewegungen. Weil gelenkige Verbindungen zwischen Membranzylinder bzw. Membranabstützung und ihren zugeordneten Bauteilen nicht erforderlich sind, bleibt auch die Bauhöhe gering.

Außerdem ist eine Anordnung möglich, bei der zwischen der Geräteführung und dem zugeordneten Bauteil (Membranzylinder oder Membranabstützung) nur Druckkräfte übertragen werden. Dazu kann die Geräteführung wenigstens eine Bohrung zur Aufnahme eines Stiftes am zugeordneten Bauteil aufweisen, wobei das Bauteil lose und zentriert an der Geräteführung abgestützt ist. Durch Anordnung mehrerer Bohrungen und zugeordneter Stifte kann auch eine Drehsicherung zwischen dem betreffenden Bauteil und der Geräteführung erreicht werden Vorteilhaft werden die Bohrungen an der Unterseite der Führungsbahn angeordnet. Das ermöglicht unter anderem auch eine einfachere Demontage des Manipulators in einzelne Baugruppen für Transportzwecke.

Damit die lose Abstützung zwischen der Geräteführung bzw. Führungsbahn und dem zugeordneten Bauteil (Membranzylinder oder Membranabstützung) bei unkontrollierten Bewegungen nicht aufgehoben wird, wenn z. B. die Last vom Lastarm herabfällt oder die Membrane reißt, kann eine Fang- oder Arretiervorrichtung zwischen dem Ständer und der Geräteführung angeordnet werden, die bei Überschreiten einer bestimmten Relativgeschwindigkeit oder einer bestimmten Beschleunigung zwischen Ständer und Geräteführung die Bewegung bremst.

Im folgenden werden in der Zeichnung dargestellte Ausführungsbeispiele der Erfindung erläutert; es zeigen:

Fig. 1 in schematischer Darstellung eine Ansicht eines Manipulators,
Fig. 2 eine andere Ausführung des Gegenstandes nach Fig. 1,
Fig. 3 schematisch und in vergrößerter Darstellung einen Lastzylinder,
Fig. 4 eine weitere Ausführung des Gegenstandes nach Fig. 1.

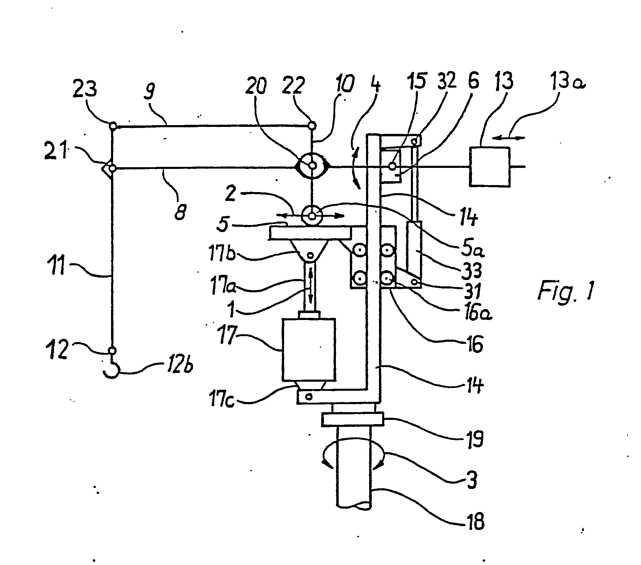

> r In der Figur 1 ist der Manipulator mit seinem Ständer 14 über die Drehlagerung 19, um eine senkrechte Achse, in Pfeilrichtung 3, drehbar auf der Säule 18 befestigt. Auf dem Ständer 14 ist die Geräteführung 16 mit den Rollen 16a geführt. An dem Ständer 14 als feststehendes Teil in bezug auf eine Vertikalbewegung ist in 17c schwenkbar der Lastzylinder 17 befestigt, dessen Kolbenstange 17a schwenkbar mit der Geräteführung 16 bei 17b verbunden ist.

Mit der Geräteführung 16 fest verbunden ist die horizontale Führungsbahn 5.

Ferner ist an dem Ständer 14 das Halteteil 6 mit der Lagerung 15 des Oberholms 8 befestigt. Der Oberholm 8 ist um die Lagerung 15 in Pfeilrichtung 4 drehbar. Am Oberholm 8 ist bei Lagerstelle 20 der Lenkhebel 10 und bei Lagerstelle 21 der Lastarm 11 drehbar gelagert. Der Parallelholm 9 ist an der Lagerstelle 22 mit dem Lenkhebel 10 und an der Lagerstelle 23 mit dem Lastarm 11 drehbar verbunden. Am Ende 12 des Lastarms 11 ist das Anschlagmittel 12b gelenkig befestigt.

Zum Ausgleich der Gewichtswirkung der Holme 8, 9, des Lastarms 11, des Lenkhebels 10 und der Lagerungen ist das Gewicht 13 auf dem Oberholm 8 arretiert. An dem unteren Ende des Lenkhebels 10 ist die Lagerung für die Rolle 5a, die auf der horizontalen Führungsbahn 5 in Pfeilrichtung 2 abrollen kann.

Das Verhältnis der Entfernung der Lagermitten von (15 bis 20) zu (15 bis 21) ist gleich dem Verhältnis von (20 bis 5a) zu (21 bis 12).

Dieses Verhältnis wird mit 'i' bezeichnet. Die Lagermitten von 15, 5a und 12 liegen auf einer Geraden. Die Fang- oder Arretiervorrichtung 33 ist bei 32 mit dem vertikal feststehenden Ständer 14 und bei 31 mit der vertikal bewegbaren Geräteführung 16 verbunden.

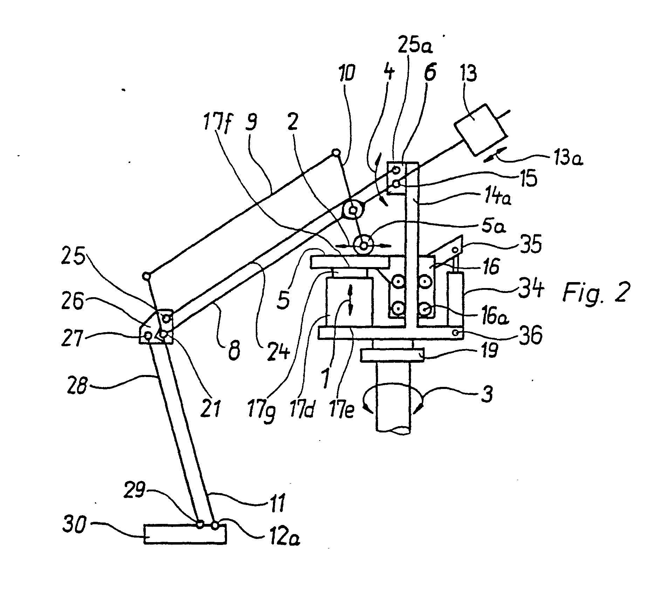

In der Figur 2 besteht die Parallelführung aus der Stange 24, der Konsole 26 und der Stange 28, die miteinander gelenkig verbunden sind. Das eine Ende der Parallelführung ist an dem Halteteil 6 bei 25a drehbar gelagert, das andere Ende bei 29 an der Verlängerung 30. Die Entfernungen der Lagermitten von (25a - 25) und von (15 - 21) sind gleich lang. Die Entfernungen der Lagermitten von (27 - 29) und von (21 - 12a) sind gleich lang. Die Strecken zwischen den Lagermitten von (15 - 25a) und von (21 - 25) sind gleich lang und zueinander parallel. Die Strecken zwischen den Lagermitten von (21 - 27) und von (12a - 29) sind gleich lang und zueinander parallel. Die Konsole 26 ist bei 21 drehbar gelagert. Der als Lastzylinder wirkende Membranzylinder 17d ist bei 17e mit dem Ständer 14a fest verbunden, während die Membranabstützung 17g gegen die mit der Geräteführung 16 fest verbundene Führungsbahn 5 bei 17f drückt. Die Fang- oder Arretiervorrichtung 34 ist bei 36 an den Ständer 14a und bei 35 an die Geräteführung 16 angeschlossen.

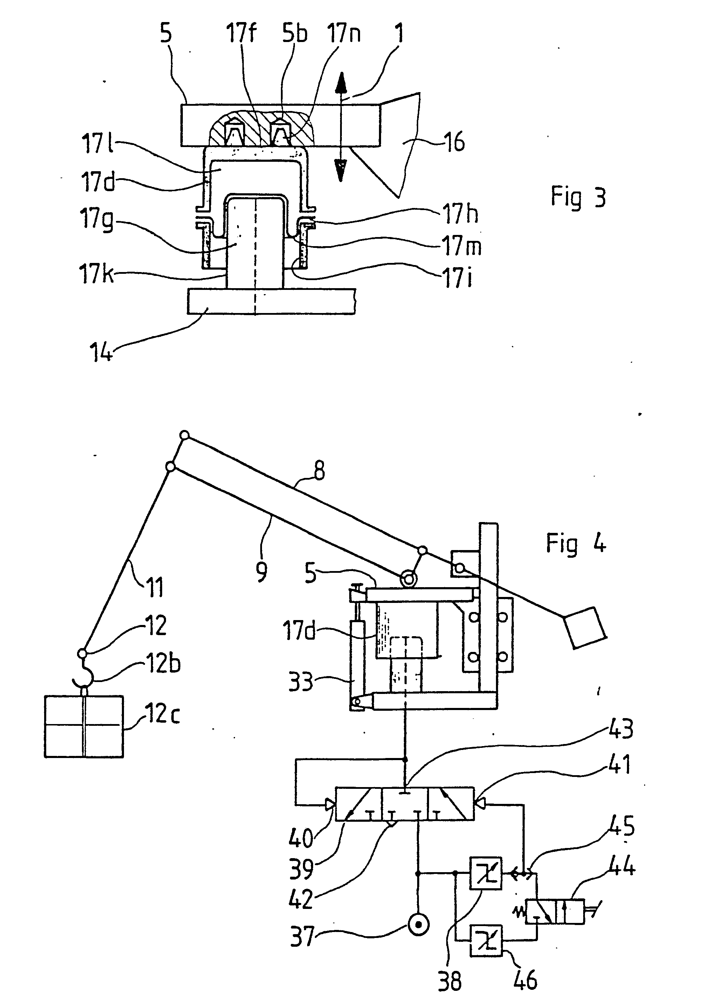

In der Figur 3 wirkt der Lastzylinder als Membranzylinder 17d zwischen dem Ständer 14 und der Führungsbahn 5, die mit der Geräteführung 16 fest verbunden ist. Das Druckmittel für die Vertikalbewegung befindet sich im Zylinderraum 17l und wirkt auf die Membranabstützung 17g. Die Langhubmembrane 17h verhindert ein Entweichen des Druckmittels. Damit die Membrane an ihrer Umlenkung 17m genügend Platz hat, muß der Durchmesser der Innenwand 17i des Zylinders größer sein, als der Durchmesser der Außenwand 17k der Membranabstützung 17g. Bei 17f drückt der Zylinder 17d gegen die Führungsbahn 5. Er wird durch die Stifte 17n, die mit den Bohrungen 5b zusammenwirken, zentriert und gegen Verdrehen gesichert.

In der Figur 4 ist die Druckmittelquelle 37 mit dem Balancierventil 39 und den Druckregelventilen 38 und 46 verbunden, mit denen der Referenzdruck eingestellt wird. Der Referenzdruck ist als Steuerdruck bei 41 an das Balancierventil 39 angeschlossen. Entgegengesetzt wirkt als Steuerdruck der Druck im Lastzylinder bei 40 auf das Balancierventil 39. Das Balancierventil ist ein 3/3 Wegeventil und ist bei 43 mit dem Lastzylinder und bei 42 mit dem Auslaß verbunden. Die zu bewegende Last 12c ist an dem Haken 12b angeschlagen. Mit dem Druckregelventil 38 wird der Referenzdruck für den Manipulator ohne die Last 12c eingestellt, mit dem Druckregelventil 46 der Referenzdruck für Gerät mit Last. Durch Zuschalten über Ventil 44 gelangt der Referenzdruck von 46 über das 'Oder' -Element 45 zum Steueranschluß 41.

Wirkungsweise:

Entsprechend dem Pantographenprinzip bewegen sich die Lagermitte der Rolle 5a und der Punkt 12, 12a am Ende des Lastarmes 11 immer in derselben Richtung, wobei sich die zurückgelegten Wege wie 'i' verhalten. Durch Zuführen oder Ablassen von Druckmitteln in oder aus dem Lastzylinder 17, 17d wird die Führungsbahn 5 mit der Rolle 5a in Pfeilrichtung 1 nach oben oder nach unten bewegt und damit auch der Punkt 12, 12a mit den Teilen, die mit Punkt 12, 12a verbunden sind. Durch die Geräteführung 16 wird die Führungsbahn 5 bei jeder Bewegung parallel geführt. Der Manipulator ist in seiner Befestigung so ausgerichtet, daß der Teil des Ständers 14, an dem die Rollen 16a laufen, senkrecht steht, und die Geräteführung 16 ist so eingestellt, daß die Führungsbahn 5 in jeder Stellung in der Horizontalen liegt. Dadurch wird bei einer Bewegung in Pfeilrichtung 2 für die Rolle 5a und den Punkt 12, 12a mit den damit verbundenen Teilen die geodätische Höhe nicht verändert und damit keine Kraft benötigt, außer zur Überwindung der Reibung und der Massenträgheit der bewegten Teile.

Mit dem Gewicht 13 wird die Wirkung der Gewichtes der Holme 8, 9 und, wenn vorhanden, des Gewichtes der Parallelführung ausgeglichen, so daß die Rolle 5a in jeder Stellung auf der Führungsbahn 5 stehenbleibt.

Die Parallelführung 24, 26, 28 bewirkt, daß die Verbindung der Lagermitten 12a mit 29 ihren Winkel zu dem Ständer 14 im Raum nicht ändert.

Die mit 12a und 29 verbundene Verlängerung 30 gestattet ein Unterfahren, z. B. in ein Regal. An der Verlängerung 30 kann beispielsweise ein Lasthaken befestigt sein. Auch kann mit den Lagermitten 12a und 29 z. B. ein Steuerkopf oder eine Drehverbindung oder ein Greifmittel verbunden sein.

Der Referenzdruck für den Manipulator ohne Last wird mit dem Druckregelventil 38 eingestellt. Mit dem Druckregelventil 46 wird der Referenzdruck für die Last 12c eingestellt.

Er wird zugeschaltet durch das Ventil 44 und gelangt durch das 'Oder' -Element 45 zu dem Steueranschluß 41 des Balancierventils 39. Bei richtiger Einstellung des Druckregelventils 46 ist in dem Lastzylinder 17 ein Druck, der die Last 12c in ihrer Position hält. Durch Herabdrücken der Last 12c wird der Druck im Lastzylinder 17 erhöht und dadurch steuert das Balancierventil 39 nach rechts, wodurch der Zylinderraum 17l über 43 mit dem Auslaß 42 verbunden wird: es kann Druckmittel aus dem Lastzylinder 17 ausströmen.

Durch Anheben der Last 12c wird der Druck im Lastzylinder 17 verringert, das Balancierventil 39 steuert nach links, wodurch der Zylinderraum 17l über 43 mit der Druckmittelquelle 37 verbunden wird: es kann Druckmittel in den Lastzylinder 17 strömen.

Beim Herabdrücken oder Anheben der Last braucht bei Verwendung des Membranzylinders 17d keine Reibung durch die sonst gleitende Dichtung zwischen Kolben und Zylinderinnenwand überwunden werden, wodurch ein sehr leichtes Bewegen der Last möglich ist. Wegen der Umlenkung der Membrane bei 17m ist der Zylinderinnendurchmesser 17i so viel größer als der Außendurchmesser 17k der Membranabstützung 17g, daß eine präzise Führung zwischen beiden Teilen nicht erforderlich ist. Die Führung zwischen diesen beiden Teilen kann deshalb von der Geräteführung 16 übernommen werden. Außer dem Wegfall der Kolbenführung hat dies zusätzliche Vorteile, wie eine weitere Verringerung der Reibung, die sonst bei der Kolbenführung auftritt, die teuren und großbauenden, gelenkigen Verbindungen von Zylinder und Kolbenstange entfallen, und es wird an Bauhöhe gespart.

Durch den Vorschlag, die Verbindung der Membranabstützung 17g oder des Membranzylinders 17d mit der Geräteführung 16 bei 17f so auszubilden, daß nur Druckkräfte übertragen werden können, wird verhindert, daß beim Anheben der Geräteführung 16, 5 ohne Druckmittelzufur zu dem Zylinderraum 17l, in diesem ein Unterdruck entsteht und die Membrane Falten bildet, die die Lebensdauer beeinträchtigt. Die Membranabstützung 17g oder der Membranzylinder 17d wird sich in diesem Fall nach unten von der Geräteführung 16, 5 trennen. Kommen beide wieder zusammen, so wird durch die Stifte 17n, die mit den Bohrungen 5b zusammenwirken, die alte Lage zueinander wieder erhalten, was für die Lebensdauer der Membrane wichtig ist.

Durch die Fang- oder Arretiervorrichtung 33 bzw. 34, die bei zu hoher Beschleunigung und/oder Geschwindigkeit nach unten die Bewegung abbremst, wird ein Herabfallen der Last und der Arme bei einem Riß in der Membrane verhindert, bzw. die bei zu hoher Beschleunigung und/oder Geschwindigkeit nach oben die Bewegung abbremst, wird ein Nachoben-Schießen der Geräteführung, der Arme und des Anschlagmittels verhindert, wenn ein falscher Referenzdruck auf das Balancierventil 39 wirkt, z. B. bei Zuschalten des Referenzdruckes vom Druckregelventil 46 durch Betätigen des Ventils 44, ohne daß die Last 12c angehängt ist, oder wenn die Last plötzlich abreißt.

Bezugszeichenliste

| | |
|---|---|
| 1 | Pfeil |
| 2 | Pfeil |
| 3 | Pfeil |
| 4 | Pfeil |
| 5 | Führungsholm |
| | a) Rolle |
| | b) Bohrungen |
| 6 | Halteteil |
| 8 | Oberholm |
| 9 | Parallelholm |
| 10 | Lenkhebel |
| 11 | Lastarm |
| 12 | Ende |
| | a) Lagermitte |
| | b) Anschlagmittel |
| | c) Last |
| 13 | Gewicht |
| 14 | Ständer |
| | a) Ständer |
| 15 | Lagerung |
| 16 | Geräteführung |
| | a) Rollen |
| 17 | Lastzylinder |
| | a) Kolbenstange |
| | b) Schwenklager |
| | c) Schwenklager |
| | d) Membranzylinder |
| | e) Verbindung |
| | f) Anlage |
| | g) Membranabstützung |
| | h) Langhubmembran |
| | i) Innenwand |
| | k) Außenwand |
| | l) Zylinderraum |
| | m) Umlenkung |
| | n) Stifte |
| 18 | Säule |
| 19 | Drehlagerung |
| 20 | Lagerstelle |
| 21 | Lagerstelle |
| 22 | Lagerstelle |
| 23 | Lagerstelle |
| 24 | Stange |
| 25 | Lagerstelle |
| | a) Lagerstelle |
| 26 | Konsole |
| 27 | Lagerstelle |
| 28 | Stange |
| 29 | Lagerstelle |
| 30 | Verlängerung |
| 31 | Lagerstelle |
| 32 | Lagerstelle |
| 33 | Fang- oder Arretiervorrichtung |
| 34 | Fang- oder Arretiervorrichtung |
| 35 | Lagerstelle |
| 36 | Lagerstelle |
| 37 | Druckmittelquelle |
| 38 | Druckregelventil |
| 39 | Balancierventil |
| 40 | Steueranschluß |
| 41 | Steueranschluß |
| 42 | Auslaß |
| 43 | Anschluß |

| | |
|---|---|
| 44 | Ventil |
| 45 | ODER-Element |
| 46 | Druckregelventil |

**Patentansprüche**

1. Manipulator nach dem Pantographenprinzip mit zwei zueinander parallelen Holmen (8, 9), einem Lastarm (1, 11) und einem dazu parallelen Lenkhebel (10), die gelenkig zu einem Parallelogrammgestänge zusammengeschlossen sind, wobei ein Holm (8) schwenkbar an einem Halteteil (6) eines um eine vertikale Achse drehbaren Ständers (14) gelagert ist und der mit einer Rollenführung (5, 5a) versehene Lenkhebel (10) an einem Lastzylinder (17) abgestützt ist, der eine Balanciersteuerung (39) aufweist, dadurch gekennzeichnet, daß der Lastzylinder (17) ein Membranzylinder (17d) ist, dessen Zylinderraum (17l) mit einer am Membranzylinder (17d) eingespannten Membran (17h) abgeschlossen ist, und daß eine in den Zylinder (17) eintauchende Membranabstützung (17g) vorgesehen ist.

2. Manipulator nach Anspruch 1, dadurch gekennzeichnet, daß die Membran eine Langhubmembran (17h) ist und daß zur Aufnahme der Membranumlenkung (17m) der Innendurchmesser des Membranzylinders (17d) größer ist als der Außendurchmesser der Membranabstützung (17g).

3. Manipulator nach Anspruch 1 oder 2, dadurch gekennzeichnet, daß die Rollenführung aus einer mit dem Lastzylinder (17) verstellbaren Führungsbahn (5) für eine darauf abgestützte Rolle (5a) des Lenkhebels (10) besteht, daß die Führungsbahn (5) an eine in Verstellrichtung des Lastzylinders (17) am Ständer (14) verschiebliche Geräteführung (16) angeschlossen ist und daß der Membranzylinder (17d) an der Geräteführung (16) sowie die Membranabstützung (17g) am Ständer (14) geführt und gehalten sind, oder umgekehrt.

4. Manipulator nach einem der Ansprüche 1 - 3, dadurch gekennzeichnet, daß die Geräteführung (16) wenigstens eine Bohrung (5b) zur Aufnahme eines Stiftes (17n) am zugeordneten Bauteil (17d bzw. 17g) aufweist und daß das Bauteil (17d bzw. 17g) lose und zentriert an der Geräteführung (16) abgestützt ist.

5. Manipulator nach einem der Ansprüche 1 - 4, gekennzeichnet durch die Anordnung mehrerer Bohrungen (5b) und zugeordneter Stifte (17n) als Drehsicherung für das betreffende Bauteil (17d bzw. 17g).

6. Manipulator nach einem der Ansprüche 1 - 5, dadurch gekennzeichnet, daß die Bohrungen (5b) an der Unterseite der Führungsbahn (5) angeordnet sind.

7. Manipulator nach einem oder mehreren der Ansprüche 4 - 6, dadurch gekennzeichnet, daß ein Stift (17n) an der Unterseite der Führungsbahn (5) angebracht ist und in eine Bohrung der Membranabstützung (17g) eintaucht, wobei die Länge des Stiftes gleich oder größer als der Zylinderhub ist.

8. Manipulator nach einem der Ansprüche 1 - 7, gekennzeichnet durch eine Fang- oder Arretiervorrichtung (33, 34) zwischen dem Ständer (14) und der Geräteführung (16), die bei Oberschreiten einer bestimmten Relativgeschwindigkeit oder einer bestimmten Beschleunigung zwischen Ständer (14) und Geräteführung (16) die Bewegung bremst.

**Claims**

1. Pantograph-type manipulator having two mutually parallel bars (8, 9), a load arm (1, 11) and a steering lever (10) parallel thereto, which are joined together in an articulated manner to form a parallelogram linkage, one bar (8) being swivellably mounted on a holding part (6) of a pillar (14) which is pivotable about a vertical axis, and the steering lever (10), which is provided with a roller guide mechanism (5, 5a), being supported on a load cylinder (17) which has a balancing control mechanism (39), characterized in that the load cylinder (17) is a diaphragm cylinder (17d), the cylinder space (17l) of which is closed off with a diaphragm (17h) clamped on the diaphragm cylinder (17d), and in that a diaphragm support (17g) plunging into the cylinder (17) is provided.

2. Manipulator according to Claim 1, characterized in that the diaphragm is a long-stroke diaphragm (17h) and in that, in order to accommodate the diaphragm deflection (17m), the inside diameter of the diaphragm cylinder (17d) is greater than the outside diameter of the diaphragm support (17g).

3. Manipulator according to Claims 1 or 2, characterized in that the roller guide mechanism comprises a guide track (5), which can be adjusted wich the load cylinder (17), for a roller (5a) of the steering lever (10), said roller being supported on the guide track, in that the guide track (5) is connected to a system guide (16) which can be displaced on the pillar (14) in the adjustment direction of the load cylinder (17), and in that the diaphragm cylinder (17d) is guided and held on the system guide (16) and the diaphragm support (17g) is guided and held on the pillar (14), or vice versa.

4. Manipulator according to any one of Claims 1 - 3, characterized in that the system guide (16) has at least one bore (5b) for accommodating a stud (17n) on the associated component (17d or 17g) and that the component (17d or 17g) is supported loosely and in centred manner on the system guide (16).

5. Manipulator according to any one of Claims 1 - 4, characterized by the arrangement of a plurality of bores (5b) and associated studs (17n) for securing the relevant component (17d or 17g) against rotation.

6. Manipulator according to any one of Claims 1 - 5, characterized in that the bores (5b) are arranged on the underside of the guide track (5).

7. Manipulator according to one or more of Claims 4 - 6, characterized in that a stud (17n) is fitted on the underside of the guide track (5) and plunges into a bore in the diaphragm support (17g), the length of the stud being equal to or greater than the cylinder stroke.

8. Manipulator according to any one of Claims 1 - 7, characterized by a safety catch or arresting device (33, 34) between the pillar (14) and the system guide (16), which brakes the movement if a certain relative velocity or a certain acceleration between the pillar (14) and system guide (16) is exceeded.

**Revendications**

1. Manipulateur opérant selon le principe du pantographe et comportant deux longerons (8, 9) mutuellement parallèles, un bras de charge (1, 11) et un levier directeur (10) parallèle à celui-ci, qui sont réunis ensemble de façon articulée sous la forme d'une tringlerie en parallélogramme, un longeron (8) étant monté de façon pivotante sur une partie de retenue (6) d'un montant (14) pouvant tourner autour d'un axe vertical et le levier directeur (10), pourvu d'un guide à rouleaux (5, 5a), s'appuyant sur un cylindre de charge (17), qui comporte une commande d'équilibrage (39), caractérisé en ce que le cylindre de charge (17) est un cylindre à membrane (17d), dont le volume cylindrique (17l) est obturé au moyen d'une membrane (17h) fixée sur le cylindre (17d) et en ce qu'il est prévu un support de membrane (17g) pénétrant dans le cylindre (17).

2. Manipulateur selon la revendication 1, caractérisé en ce que la membrane est une membrane à course longitudinale (17h) et en ce que, pour absorber le détournement de membrane (17m), le diamètre intérieur du cylindre à membrane (17d) est plus grand que le diamètre extérieur du support de membrane (17g).

3. Manipulateur selon une des revendications 1 ou 2, caractérisé en ce que le guide à rouleaux se compose d'une voie de guidage (5), déplaçable avec le cylindre de charge (17), pour un rouleau (5a) du levier directeur (10) s'appuyant sur celle-ci, en ce que la voie de guidage (5) est reliée à un guide d'appareil, mobile sur le montant (14) dans la direction de manoeuvre du cylindre de charge, et en ce que le cylindre à membrane (17d) est guidé et maintenu sur le guide d'appareil (16) tandis que le support de membrane (17g) est guidé et maintenu sur le montant (14), ou inversement.

4. Manipulateur selon une des revendications 1 à 3, caractérisé en ce que le guide d'appareil (16) comporte au moins un trou (5b) pour recevoir une broche (17n) du composant associé (17d ou 17g) et en ce que le composant (17d ou 17g) est appuyé de façon lâche et centrée sur le guide d'appareil (16).

5. Manipulateur selon une des revendications 1 à 4, caractérisé par la disposition de plusieurs trous (5b) et de broches associées (17n) comme sécurité anti-rotation pour le composant correspondant (17d ou 17g).

6. Manipulateur selon une des revendications 1 à 5, caractérisé en ce que les trous (5b) sont disposés sur le côté inférieur de la voie de guidage (5).

7. Manipulateur selon une ou plusieurs des revendications 4 à 6, caractérisé en ce qu'une broche (17n) est disposée sur le côté inférieur de la voie de guidage (5) et pénètre dans un trou du support de membrane (17g), la longueur de la broche étant égale ou supérieure à la course du cylindre.

8. Manipulateur selon une des revendications 1 à 7 caractérisé par un dispositif de réception ou d'arrêt (33, 34) placé entre le montant (14) et le guide d'appareil (16) et qui, lors du dépassement d'une vitesse relative déterminée ou d'une accélération déterminée entre le montant (14) et le guide d'appareil (16), freine le mouvement.

Fig. 1

0 174 437

Fig. 2

0 174 437

Fig 3

Fig 4